# EUROPÄISCHE PATENTSCHRIFT

(11) **EP 3 691 995 B1**
(45) Veröffentlichungstag und Bekanntmachung des Hinweises auf die Patenterteilung: **17.03.2021**
(21) Anmeldenummer: 17780113.1
(22) Anmeldetag: 05.10.2017
(51) Int. Cl.: C01B 33/107, B01J 23/24, B01J 23/888

(54) **VERFAHREN ZUR HERSTELLUNG VON CHLORSILANEN UNTER VERWENDUNG EINES KATALYSATORS AUSGEWÄHLT AUS DER GRUPPE CO, MO, W**
PROCESS FOR PRODUCING CHLOROSILANES USING A CATALYST SELECTED FROM THE GROUP OF CO, MO, W
PROCÉDÉ DE PRODUCTION DE CHLOROSILANES AU MOYEN D'UN CATALYSEUR CHOISI DANS LE GROUPE CONSTITUÉ PAR CO, MO, W

(43) Veröffentlichungstag der Anmeldung: 12.08.2020
(73) Patentinhaber: Wacker Chemie AG, 81737 München (DE)
(72) Erfinder: RIMBÖCK, Karl-Heinz, 84431 Heldenstein (DE); PÄTZOLD, Uwe, 84489 Burghausen (DE); SOBOTA, Marek, 84489 Burghausen (DE)
(74) Vertreter: Belz, Ferdinand
(86) Internationale Anmeldenummer: PCT/EP2017/075421
(87) Internationale Veröffentlichungsnummer: WO 2019/068336

(56) Entgegenhaltungen:
- WO-A1-2009/029791
- WO-A1-2012/123159
- WO-A1-2016/198264
- US-A- 5 871 705

## Beschreibung

Die Erfindung betrifft ein Verfahren zur Herstellung von Chlorsilanen in einem Wirbelschichtreaktor durch Umsetzung eines Chlorwasserstoff enthaltenden Reaktionsgases mit einer partikulären Kontaktmasse, enthaltend Reinstsilicium und einen Katalysator, wobei der Katalysator zumindest ein Element aus der Gruppe mit Co, Mo und W umfasst, und wobei die Chlorsilane die allgemeinen Formel HₙSiCl₄₋ₙ und/oder HₘCl₆₋ₘSi₂ mit n = 1-4 und m = 0-4 aufweisen

Die Herstellung von polykristallinem Silicium als Ausgangsmaterial für die Fertigung von Chips oder Solarzellen erfolgt üblicherweise durch Zersetzung seiner flüchtigen Halogenverbindungen, insbesondere Chlorsilane wie Trichlorsilan (TCS, HSiCl₃). Um den Anforderung für die Fertigung von Chips oder Solarzellen zu genügen, muss das polykristalline Silicium mindestens eine Reinheit von mehr als 99,9 % aufweisen. Ab einer Reinheit > 99 % spricht man von Reinstsilicium.

Polykristallines Silicium dieser Reinheit kann mittels des Siemens-Prozesses in Form von Stäben erzeugt werden, wobei polykristallines Silicium in einem Reaktor an erhitzten Filamentstäben abgeschieden wird. Als Prozessgas wird üblicherweise ein Gemisch aus TCS und Wasserstoff eingesetzt. Alternativ dazu kann polykristallines Siliciumgranulat in einem Wirbelschichtreaktor hergestellt werden. Dabei werden Siliciumpartikeln mittels einer Gasströmung in einer Wirbelschicht fluidisiert, wobei diese über eine Heizvorrichtung auf hohe Temperaturen aufgeheizt wird. Durch Zugabe eines siliciumhaltigen Reaktionsgases wie TCS erfolgt eine Pyrolysereaktion an der heißen Partikeloberfläche, wodurch die Partikel in ihrem Durchmesser wachsen.

Das polykristalline Silicium dient als Ausgangsmaterial bei der Herstellung von multikristallinem Silicium, beispielsweise nach dem Blockgussverfahren. Das in Form eines Blockes erhaltene multikristalline Silicium hat üblicherweise eine höhere Reinheit als polykristallines Silicium und kann zur Fertigung von Solarzellen eingesetzt werden. Dazu werden die Siliciumblöcke in der Regel zu rechteckigen Wafern zersägt.

Ferner dient polykristallines Silicium als Ausgangsmaterial bei der Herstellung von einkristallinem Silicium, beispielsweise nach dem Zonenschmelz- oder Czochralskiverfahren. Dabei werden stabförmige Siliciumeinkristalle (Ingots) erhalten, die zu runden Wafern zersägt werden.

Bei der Abscheidung von polykristallinem Silicium in Wirbelschicht- oder Siemensreaktoren fällt neben dem Zielprodukt (Siliciumgranulat bzw. Siliciumstäbe) Siliciumstaub als Nebenprodukt an, dessen Reinheit üblicherweise der Reinheit des Zielprodukts entspricht. Ferner fällt Siliciumstaub auch bei der mechanischen Bearbeitung (Brechen, Mahlen) der Siliciumstäbe, Siliciumblöcke und Ingots an.

Diese Reinstsiliciumstäube (Reinheit > 99,9 %) wurden bisher entweder verworfen oder zusammen mit metallurgischem (mgSi), das üblicherweise eine Reinheit < 99,9 % aufweist, zur Herstellung von Chlorsilanen herangezogen.

Die Herstellung von Chlorsilanen, insbesondere TCS, kann im Wesentlichen durch drei Verfahren erfolgen, denen folgende Reaktionen zugrunde liegen (vgl. WO2016/198264A1):

(1) Si + 3HCl --> SiHCl₃ + H₂ + Nebenprodukte

(2) Si + 3SiCl₄ + 2H₂ --> 4SiHCl₃ + Nebenprodukte

(3) SiCl₄ + H₂ --> SiHCl₃ + HCl + Nebenprodukte

Als Nebenprodukte können weitere Halogensilane anfallen, beispielsweise Monochlorsilan (H₃SiCl), Dichlorsilan (H₂SiCl₂), Siliciumtetrachlorid (STC, SiCl₄) sowie Di- und Oligosilane. Ferner können Verunreinigungen wie Kohlenwasserstoffe, Organochlorsilane und Metallchloride Bestandteil der Nebenprodukte sein. Um hochreines TCS zu erzeugen, erfolgt daher anschließend üblicherweise eine Destillation.

WO 2012/123159 A1 beschreibt ein Verfahren zur Hydrodehalogenierung von STC (vgl. Reaktion (3)) unter anderem unter Verwendung eines W-, oder Mo-Katalysators.

Bei der Hydrochlorierung gemäß Reaktion (1) werden aus mgSi unter Zusatz von Chlorwasserstoff (HCl) Chlorsilane in einem Wirbelschichtreaktor hergestellt. Ein solches Verfahren ist beispielsweise in der US4092446 beschrieben.

Aus der EP 1 586 537 A1 ist ferner ein Hydrochlorierungsverfahren zur Herstellung von TCS bekannt, bei dem Siliciumstaub mit einer maximalen Korngröße von 80 µm, der bei der Zerkleinerung von mgSi anfällt, direkt in einen Wirbelschichtreaktor eingeschleust wird.

WO 2009/029791 A1 beschreibt ein Verfahren zur Herstellung von TCS, wobei mgSi mit einem Cu- oder Fe-Katalysator verpresst und danach vermahlen wird. Die Reaktionsmasse enthält 40 ppm bis 1 Gew.-% an Katalysator. Das erhaltene Pulver wird in einen Wirbelschichtreaktor eingebracht und bei 200 bis 800°C mit HCl umgesetzt.

US 5,871,705 beschreibt ein Verfahren zur Herstellung von TCS, bei dem u.a. auch Reinstsilicium (mindestens 99,99 %) mit HCl und Dichlorsilan unter Anwesenheit eines Ni-Katalysators und NaCl in einer Menge von 0,2 Gew.-% umgesetzt wird. Ohne die zusätzliche Aktivierung des Reinstsiliciums durch Dichlorsilan und NaCl kann die TCS-Selektivität auf unter 80 % sinken.

Aus der WO 2012/065892 A1 geht hervor, dass sich Siliciumstaub, der bei der mechanischen Bearbeitung von Reinstsilicium (Reinheit mindestens 99,99 %) oder bei dessen Herstellung anfällt, nicht durch Hydrochlorierung in einem Wirbelschichtreaktor bei 380°C zu Chlorsilanen umsetzen lässt. Bei einer Temperatur von 750°C konnten Chlorsilane im Wirbelschichtverfahren mit einer schlechten Ausbeute von 15 % erhalten werden. Erst durch Verwendung eines Festbettes aus einer Schüttung mgSi (150 bis 250 µm) und Einleiten des auf eine Partikelgröße < 50 µm zermahlenen Reinstsiliciums unterhalb des Festbettes konnte eine Steigerung der Ausbeute an Chlorsilanen erhalten werden.

Nachteilig ist, dass ein zusätzlicher Mahlschritt die Kosten des Verfahrens in die Höhe treibt. Daneben stellen die relativ hohen Temperaturen, bei welchen bekannte Verfahren ablaufen, höhere Anforderung an das Material der Reaktoranlagen. Die Erzeugung dieser Temperaturen erfordert zudem einen erhöhten Energiebedarf. So kann es beispielsweise erforderlich sein, bereits die Zuleitungen für die Edukte vorzuheizen. Insgesamt verursachen die hohen Temperaturen hohe Kosten und eine erhöhte Störanfälligkeit. Zudem sind neben den ohnehin für die Herstellung von Chlorsilanen vorhandenen Wirbelschichtreaktoren zusätzlich Festbettreaktoren bereitzustellen, was die Verwertung des Reinstsiliciumstaubs weiter verteuert. Außerdem kann es erforderlich sein für die Verwertung des Reinstsiliciumstaubs zusätzliches mgSi zuzukaufen.

Der vorliegenden Erfindung lag somit die Aufgabe zugrunde, ein Verfahren bereitzustellen, das eine direkte Umsetzung von Stäuben aus Reinstsilicium ermöglicht, ohne die aus dem Stand der Technik bekannten Nachteile zu zeigen.

Diese Aufgabe wird gelöst durch ein Verfahren zur Herstellung von Chlorsilanen in einem Wirbelschichtreaktor durch Umsetzung eines Chlorwasserstoff enthaltenden Reaktionsgases mit einer partikulären Kontaktmasse, enthaltend Reinstsilicium (Reinheit > 99,9 %) und einen Katalysator, wobei der Katalysator zumindest ein Element aus der Gruppe mit Co, Mo und W umfasst. Die Chlorsilane weisen die allgemeinen Formel HₙSiCl₄₋ₙ und/oder HₘCl₆₋ₘSi₂ mit n = 1-4 und m = 0-4 auf.

Gemäß einer bevorzugten Ausführungsform umfasst der Katalysator ferner zumindest ein Element aus der Gruppe mit Zn, Cr und Ni.

Überraschenderweise hat sich gezeigt, dass sich Stäube aus Reinstsilicium (Reinheit > 99,9 %) bereits unter Anwesenheit geringer Mengen der Elemente Cobalt, Molybdän, Wolfram und Mischungen daraus durch Hydrochlorierung unter üblichen Reaktionsbedingungen (bspw. bei einer Temperatur von < 380°C und einem absoluten Druck zwischen 0,2 und 0,5 MPa wie beispielsweise in EP 1 586 537 A1 beschrieben) in einem Wirbelschichtreaktor zu Chlorsilanen, insbesondere TCS, umsetzen lassen. Eine gemeinsame Umsetzung mit mgSi ist nicht notwendig. Durch Zusätze zumindest eines der Elemente Zink, Chrom und Nickel konnte in einigen Fällen die Chlorsilanselektivität noch erhöht werden.

Die das Reinstsilicium und den Katalysator enthaltende Kontaktmasse kann direkt in vorhandenen Wirbelschichtreaktoren eingesetzt werden. Eine Umstellung auf Festbettreaktoren ist nicht erforderlich. Mit besonderem Vorteil werden zudem Chlorsilanselektivitäten und Umsätze an HCl erreicht, die vergleichbar mit den Ergebnissen sind, die bei der Hydrochlorierung von mgSi erhalten werden.

Die direkte Verwertung der als Nebenprodukt anfallenden Reinstsiliciumstäube bietet einen großen wirtschaftlichen Vorteil. Insbesondere entfallen sogenannte Umarbeitungskosten wie beispielsweise Einschmelzen oder Vermischen des Reinstsiliciumstaubs mit mgSi. Kosten für die Entsorgung der Reinstsiliciumstäube entfallen ebenfalls. Darüber hinaus kann der Zukauf von mgSi reduziert werden.

Der Katalysator ist in einem Anteil von 100 bis 400 ppmw in der Kontaktmasse enthalten, bezogen auf das Gewicht der Kontaktmasse.

Bevorzugt ist der Katalysator in metallischer, oxidischer, carbidischer, legierter und/oder salzartiger Form in der Kontaktmasse enthalten. Auch Mischungen der genannten Formen sind denkbar. Besonders bevorzugt liegt der Katalysator als Carbid und/oder Chlorid des betreffenden Elements vor. Ferner Kann der Katalysator als Silicid vorliegen.

Vorzugsweise besteht die Kontaktmasse aus partikulärem Reinstsilicium (Staub) und dem Katalysator. Die Zusammensetzung des Reinstsiliciumstaubs bzw. der Kontaktmasse kann mittels Röntgenfluoreszenzanalyse (RFA) erfolgen.

Gemäß einer bevorzugten Ausführungsform handelt es sich bei der Kontaktmasse um ein Nebenprodukt, das bei der Abscheidung von polykristallinem Silicium nach dem Siemens- oder Granulatverfahren anfällt. Ferner kann es sich um ein Nebenprodukt handeln, das bei der mechanischen Bearbeitung von poly-/multi- oder einkristallinem Silicium anfällt. Bei der mechanischen Bearbeitung handelt es sich insbesondere um Brechen und/oder Mahlen. Handelt es sich bei der Kontaktmasse um ein solches Nebenprodukt ist eine Aufreinigung vor der Hydrochlorierung grundsätzlich nicht erforderlich. Der Reinstsiliciumstaub kann direkt umgesetzt werden. Aufwendige Reinigungsschritte entfallen. Grundsätzlich weniger bevorzugt ist die Verwendung von Siliciumstäuben, die bei Sägeprozessen als Nebenprodukt anfallen, da diese in der Regel stark verunreinigt sind wie beispielsweise in der DE 10 2014 007 354 A1 beschrieben.

Unter Umständen kann es allerdings bevorzugt sein, dass dem erfindungsgemäßen Verfahren eine Reinigung der Kontaktmasse vorausgeht.

Der Katalysator kann insbesondere Bestandteil eines Abriebs von Zerkleinerungswerkzeugen wie Hämmer, Walzenmühlen, Backenbrechern oder Meißeln sein. Ferner kann er Bestandteil eines Abriebs von Anlagenteilen und/oder Rohrleitungen sein. Ein Abrieb bei Anlagenteilen kann beispielsweise durch ein pneumatisches Fördern des üblicherweise scharfkantigen Siliciumstaubes auftreten. Der Katalysator kann also in Form von Fremdpartikeln in dem Reinstsiliciumstaub enthalten sein. Beispielsweise ist es üblich, dass Backenbrecher zum Brechen von Reinstsilicium mit Hartmetallbeschichtungen, z.B Wolframcarbid, versehen sind. Der Katalysator kann infolgedessen als Wolframcarbid bereits in dem als Nebenprodukt anfallenden Reinstsiliciumstaub enthalten sein. Der Zusatz weiterer Katalysatormengen kann entfallen oder zumindest minimiert werden.

Gemäß einer weiteren Ausführungsform weist das Reinstsilicium einen Sauterdurchmesser d₃₂ von 0,5 bis 150 µm, bevorzugt von 1 bis 100 µm, besonders bevorzugt von 5 bis 80 µm, insbesondere von 10 bis 80 µm, auf. Die Korngröße beträgt vorzugsweise 0,1 bis 200 µm.

Gegebenenfalls kann der als Nebenprodukt anfallende Reinstsiliciumstaub einem Mahlprozess und/oder Klassierungsverfahren (z.B. Sieben, Sichten) unterzogen werden, um die gewünschte Partikelgröße zu erhalten.

Die Bestimmung der Korngrößenverteilung bzw. des Sauterdurchmessers d₃₂ kann nach ISO 13320 (Laserbeugung) und/oder ISO 13322 (Bildanalyse) erfolgen. Eine Berechnung von mittleren Partikelgrößen/-durchmessern aus Partikelgrößenverteilungen kann nach DIN ISO 9276-2 erfolgen.

Vorzugsweise wird das Verfahren bei einer Temperatur von 280 bis 400°C, bevorzugt 320 bis 380°C, besonders bevorzugt 340°C bis 360°C, durchgeführt. Bei der Temperatur handelt es sich um die Regeltemperatur des Wirbelschichtreaktors. Grundsätzlich wird die Regeltemperatur innerhalb eines Regelkreises als Sollwert mittels eines einstellbaren Temperaturreglers vorgegeben und durch ein entsprechendes Kühl-/Heizsystem innerhalb der vorgegebenen Grenzen konstant gehalten. Die Bestimmung der Temperatur kann beispielsweise mittels Temperaturfühlern im Reaktorinneren erfolgen (mehrere Temperaturfühler und damit Messpunkte über die gesamte Reaktorhöhe).

Vorzugsweise wird das Verfahren bei einem absoluten Druck im Wirbelschichtreaktor von 0 bis 0,5 MPa, bevorzugt 0,02 bis 0,4 MPa, besonders bevorzugt 0,05 bis 0,25 MPa, durchgeführt.

Während der Reaktor angefahren wird, beispielweise bis zur Ausbildung einer stabilen Wirbelschicht, können sich die Werte für Druck und Temperatur von den Werten während des kontinuierlichen Reaktionsprozesses unterscheiden. Dasselbe gilt für den Abfahrprozess.

Gemäß einer weiteren Ausführungsform liegen Chlorwasserstoff (HCl) und Reinstsilicium in einem Molverhältnis von 10:1 bis 3:1, bevorzugt 7:1 bis 3:1, besonders bevorzugt 5:1 bis 3:1, insbesondere 3,9:1 bis 3,1:1, in dem Wirbelschichtreaktor vor. HCl und die Kontaktmasse werden insbesondere während der Reaktion derart kontinuierlich zugegeben, dass sich das oben genannte Verhältnis einstellt. Grundsätzlich ist eine Vorheizung der Kontaktmasse und/oder von HCl nicht erforderlich, kann allerdings unter Umständen angezeigt sein.

Vorzugsweise enthält das Reaktionsgas mindestens 50 Vol.-%, bevorzugt mindestens 70 Vol.-%, besonders bevorzugt mindestens 90 Vol.-%, Chlorwasserstoff. HCl. Neben HCl kann das Reaktionsgas ferner ein oder mehrere Komponenten ausgewählt aus der Gruppe mit H₂, HnSiCl4-n (n = 0 bis 4), HₘCl₆₋ₘSi₂ (m = 0 bis 6), H_{q}Cl_{6-q}Si₂O (q = 0 bis 4), CH₄, C₂H₆, CO, CO₂, O₂, N₂ enthalten. Diese Komponenten können beispielsweise aus in einem Verbund zurückgewonnenem HCl stammen. Das Reaktionsgas kann ferner ein Trägergas enthalten, beispielsweise Stickstoff oder ein Edelgas wie Argon. Ferner kann dem Reaktionsgas Wasserstoff zugesetzt werden, insbesondere um die Gleichgewichtslage der Reaktion zu beeinflussen. Wasserstoff kann auch als Verunreinigung in zurückgewonnenem HCl enthalten sein.

Die Bestimmung der Zusammensetzung des Reaktionsgases erfolgt üblicherweise vor der Zuleitung zum Reaktor über Raman- und Infrarotspektroskopie sowie Gaschromatographie. Dies kann sowohl über stichprobenartig entnommene Proben und anschließende "offline-Analysen" als auch über in das System eingebundene "online"-Analysengeräte erfolgen.

Der Quotient aus Füllhöhe zu Reaktordurchmesser beträgt vorzugsweise 10:1 bis 1:1, bevorzugt 8:1 bis 2:1, besonders bevorzugt 6:1 bis 3:1. Die Füllhöhe stellt im Wesentlichen den Massenschwerpunkt der Wirbelschicht dar und ist abhängig von der Korngrößenverteilung der Partikel (feine Partikel entsprechen eher einer großen, grobe eher einer kleinen Ausdehnung der Wirbelschicht um den Massenschwerpunkt).

Bei den mit dem erfindungsgemäßen Verfahren hergestellten Chlorsilanen handelt es sich bevorzugt um mindestens ein Chlorsilan ausgewählt aus der Gruppe mit Monochlorsilan, Dichlorsilan, Trichlorsilan, Si₂Cl₆ und HSi₂Cl₅. Besonders bevorzugt handelt es sich um TCS.

Das erfindungsgemäße Verfahren ist vorzugsweise in einen Verbund zur Herstellung von polykristallinem Silicium eingebunden. Der Verbund umfasst insbesondere folgende Prozesse:
- Erzeugung von TCS mittels einem der Verfahren gemäß den Reaktionen (1), (2) und (3).
- Aufreinigung des erzeugten TCS zu TCS mit Halbleiterqualität.
- Abscheidung von polykristallinem Silicium, bevorzugt nach dem Siemens-Verfahren oder als Granulat.
- Weiterverarbeitung des erhaltenen polykristallinen Siliciums.
- Recycling des bei der Herstellung/Weiterverarbeitung des polykristallinen Siliciums anfallenden Siliciumstaubs gemäß dem erfindungsgemäßen Verfahren.

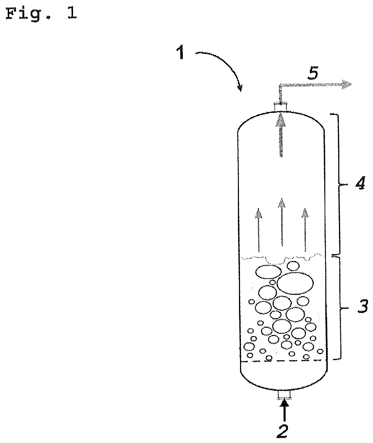

Fig. 1 zeigt einen Wirbelschichtreaktor 1 zur Durchführung des erfindungsgemäßen Verfahrens. Das Reaktionsgas 2 wird vorzugsweise von unten und gegebenenfalls von der Seite (z.B. tangential oder orthogonal zum Gasstrom von unten) in die partikuläre Kontaktmasse eingeblasen, wodurch die Partikel der Kontaktmasse fluidisiert werden und eine Wirbelschicht 3 bilden. Der Volumenstrom kann durch einen Durchflussmesser (z.B. Schwebekörper-Durchflussmesser) in der Reaktionsgas-Zuleitung zum Reaktor bestimmt werden. In der Regel wird zum Starten der Reaktion mittels einer außerhalb des Reaktors angeordneten Heizvorrichtung (nicht dargestellt) die Wirbelschicht 3 beheizt. Während des kontinuierlichen Betriebs ist üblicherweise kein Heizen erforderlich. Ein Teil der Partikel wird mit der Gasströmung aus der Wirbelschicht 3 in den Freiraum 4 oberhalb der Wirbelschicht 3 transportiert. Der Freiraum 4 ist durch eine sehr geringe Feststoffdichte gekennzeichnet, wobei diese in Richtung Reaktoraustritt abnimmt. Der Partikelanteil, der mit der Gasströmung den Reaktor verlässt, wird als Partikelaustrag 5 bezeichnet.

### Beispiele

Die Beispiele wurden in einem Wirbelschichtreaktor wie beispielsweise in der US4092446 beschrieben durchgeführt.

### Allgemeiner Verfahrensverlauf:

Zunächst wurde das vorgelegte Bett aus Kontaktmasse so lange mit Stickstoff (Trägergas) durchströmt bis sich eine Wirbelschicht ausbildete. Der Quotient aus Wirbelbetthöhe zu Reaktordurchmesser wurde auf einen Wert von etwa 4 eingestellt. Der Reaktordurchmesser betrug etwa 1 m. Die Wirbelschicht wurde dann mit einer externen Heizvorrichtung auf eine Temperatur von 320°C gebracht. Diese Temperatur wurde mit Hilfe einer Kühlung über den gesamten Versuchszeitraum gehalten. Anschließend wurde HCl so zugegeben und die Kontaktmasse so nachdosiert, dass die Höhe der Wirbelschicht über den gesamten Versuchszeitraum konstant blieb und sich ein konstantes Molverhältnis der Reaktanden (HCl:Si) von 3:1 einstellte. Der Druck im Reaktor betrug über die gesamte Versuchszeit 0,1 MPa Überdruck. Nach 48 h und 49 h Laufzeit wurde jeweils sowohl eine Flüssigkeitsprobe als auch eine Gasprobe entnommen. Die kondensierbaren Anteile des Produktgasstroms (Chlorsilangasstrom) wurden über eine Kühlfalle bei -40°C kondensiert und mittels Gaschromatographie (GC) analysiert und daraus die TCS-Selektivität bestimmt. Die Detektion erfolgte über einen Wärmeleitfähigkeitsdetektor. Der nicht-kondensierbare Anteil des Produktgasstroms wurde mit einem Infrarot-Spektrometer auf nicht umgesetzten HCl [Vol.-%] hin analysiert. Aus den erhaltenen Werten nach 48 und 49 h) wurden jeweils die Mittelwerte gebildet. Nach jedem Durchlauf wurde der Reaktor vollständig entleert und neu mit Kontaktmasse befüllt.

### Vergleichsbeispiel 1:

Als Kontaktmasse wurden ausschließlich Reinstsiliciumpartikel (Reinheit > 99,9 %, maximale Partikelgröße 200 µm, d₃₂ = 73 pm) dem oben beschriebenen allgemeinen Ablauf unterzogen. In Übereinstimmung mit der WO 2012/065892 A1 konnte keine Bildung von gasförmigen Chlorsilanen nachgewiesen werden.

### Vergleichsbeispiel 2:

Als Kontaktmasse wurde ausschließlich ein Siliciumpulver aus handelsüblichem mgSi (Fe-Gehalt: 1,4 Gew.-%, Al-Gehalt: 0.2 Gew.-%, Ca-Gehalt: 0,015 Gew.-%, maximale Partikelgröße 200 µm, d₃₂ = 70 pm) dem oben beschriebenen allgemeinen Ablauf unterzogen. Erwartungsgemäß fand eine Umsetzung der Reaktanden zu Chlorsilanen satt. Die Menge an nicht umgesetztem HCl betrug 7,5 Vol.-%. Die TCS-Selektivität betrug 78 %.

### Ausführungsbeispiel:

Als Kontaktmasse wurde Reinstsiliciumstaub (d₃₂ = 68 pm) dem oben beschriebenen allgemeinen Ablauf unterzogen, wobei der Reinstsiliciumstaub produktionsbedingt (Brechen von polykristallinem Silicium) folgende Elemente in den angegebenen Anteilen als Verunreinigungen enthielt: Co: 10 ppmw, Mo: 5 ppmw, W: 72 ppmw, Zn: 154 ppmw, Ni: 35 ppmw, Cr: 79 ppmw. Überraschenderweise fand unter diesen Bedingungen eine Umsetzung des hochreinen Siliciums zu Chlorsilanen statt. Die Menge an nicht umgesetztem HCl betrug 10,7 Vol.-%. Die TCS-Selektivität betrug 81 %.

Die Ergebnisse belegen, dass sich Reinstsilicium gemäß dem erfindungsgemäßen Verfahren direkt durch Hydrochlorierung in einem Wirbelschichtreaktor umsetzen lässt. Die erzielten Ergebnisse (HCl-Umsatz und TCS-Selektivität) sind vergleichbar mit den Ergebnissen, die beim Einsatz von mgSi erhalten werden. Gemäß dem erfindungsgemäßen Verfahren können sogar höhere TCS-Selektivitäten erzielt werden.

## Patentansprüche

1. Verfahren zur Herstellung von Chlorsilanen in einem Wirbelschichtreaktor durch Umsetzung eines Chlorwasserstoff enthaltenden Reaktionsgases mit einer partikulären Kontaktmasse, enthaltend Reinstsilicium mit einer Reinheit > 99,9 % und einen Katalysator, wobei der Katalysator zumindest ein Element aus der Gruppe mit Co, Mo und W umfasst, und wobei die Chlorsilane die allgemeine Formel HₙSiCl₄₋ₙ und/oder HₘCl₆₋ₘSi₂ mit n = 1-4 und m = 0-4 aufweisen, **dadurch gekennzeichnet, dass** der Katalysator in einem Anteil von 100 bis 400 ppmw in der Kontaktmasse enthalten ist, bezogen auf das Gewicht der Kontaktmasse.

2. Verfahren nach Anspruch 1, **dadurch gekennzeichnet, dass** der Katalysator zumindest ein Element aus der Gruppe mit Zn, Cr und Ni umfasst.

3. Verfahren nach einem der vorhergehenden Ansprüche, **dadurch gekennzeichnet, dass** der Katalysator in metallischer, oxidischer, carbidischer, legierter und/oder salzartiger Form in der Kontaktmasse enthalten ist.

4. Verfahren nach einem der vorhergehenden Ansprüche, **dadurch gekennzeichnet, dass** die Kontaktmasse ein Nebenprodukt bei der Abscheidung von polykristallinem Silicium und/oder bei der mechanischen Bearbeitung von poly-/multi- oder einkristallinem Silicium ist.

5. Verfahren nach einem der vorhergehenden Ansprüche, **dadurch gekennzeichnet, dass** der Katalysator Bestandteil eines Abriebs von Zerkleinerungswerkzeugen, Anlagenteilen und/ oder Rohrleitungen ist.

6. Verfahren nach einem der vorhergehenden Ansprüche, **dadurch gekennzeichnet, dass** das Reinstsilicium einen Sauterdurchmesser d₃₂ von 0,5 bis 150 µm, bevorzugt 1 bis 100 µm, besonders bevorzugt 5 bis 80 µm, insbesondere 10 bis 80 µm, aufweist.

7. Verfahren nach einem der vorhergehenden Ansprüche, **dadurch gekennzeichnet, dass** das Verfahren bei einer Temperatur von 280 bis 400°C, bevorzugt 320 bis 380°C, besonders bevorzugt 340°C bis 360°C, durchgeführt wird.

8. Verfahren nach einem der vorhergehenden Ansprüche, **dadurch gekennzeichnet, dass** das Verfahren bei einem absoluten Druck im Wirbelschichtreaktor von 0 bis 0,5 MPa, bevorzugt 0,02 bis 0,4 MPa, besonders bevorzugt 0,05 bis 0,25 MPa, durchgeführt wird.

9. Verfahren nach einem der vorhergehenden Ansprüche, **dadurch gekennzeichnet, dass** Chlorwasserstoff und Reinstsilicium in einem Molverhältnis von 10:1 bis 3:1, bevorzugt 7:1 bis 3:1, besonders bevorzugt 5:1 bis 3:1, insbesondere 3,9:1 bis 3,1:1, vorliegen.

10. Verfahren nach einem der vorhergehenden Ansprüche, **dadurch gekennzeichnet, dass** das Reaktionsgas mindestens 50 Vol.-%, bevorzugt mindestens 70 Vol.-%, besonders bevorzugt mindestens 90 Vol.-%, Chlorwasserstoff enthält.

11. Verfahren nach einem der vorhergehenden Ansprüche, **dadurch gekennzeichnet, dass** der Quotient aus Füllhöhe zu Reaktordurchmesser 10:1 bis 1:1, bevorzugt 8:1 bis 2:1, besonders bevorzugt 6:1 bis 3:1, beträgt.

12. Verfahren nach einem der vorhergehenden Ansprüche, **dadurch gekennzeichnet, dass** die Chlorsilane ausgewählt sind aus der Gruppe mit Monochlorsilan, Dichlorsilan, Trichlorsilan, Si₂Cl₆, HSi₂Cl₅ und Mischungen daraus.

13. Verfahren nach einem der vorhergehenden Ansprüche, **dadurch gekennzeichnet, dass** es in einen Verbund zur Herstellung von polykristallinem Silicium eingebunden ist.

## Claims

1. Process for producing chlorosilanes in a fluidized bed reactor by reaction of a hydrogen chloride-containing reaction gas with a particulate contact mass containing ultrahigh purity silicon having a purity of > 99.9% and a catalyst, wherein the catalyst comprises at least one element from the group comprising Co, Mo and W and wherein the chlorosilanes have the general formula HₙSiCl₄₋ₙ and/or HₘCl₆₋ₘSi₂ where n = 1-4 and m = 0-4, **characterized in that** the catalyst is present in the contact mass in a proportion of 100 to 400 ppmw, based on the weight of the contact mass.

2. Process according to Claim 1, **characterized in that** the catalyst comprises at least one element from the group comprising Zn, Cr and Ni.

3. Process according to either of the preceding claims, **characterized in that** the catalyst is present in the contact mass in metallic, oxidic, carbidic, alloyed and/or salt-like form.

4. Process according to any of the preceding claims, **characterized in that** the contact mass is a byproduct in the deposition of polycrystalline silicon and/or in the mechanical processing of polycrystalline/multicrystalline or single-crystal silicon.

5. Process according to any of the preceding claims, **characterized in that** the catalyst is a constituent of an abraded material from comminution equipment, plant parts and/or pipelines.

6. Process according to any of the preceding claims, **characterized in that** the ultrahigh purity silicon has a Sauter mean diameter d₃₂ of 0.5 to 150 µm, preferably 1 to 100 µm, particularly preferably 5 to 80 µm, in particular 10 to 80 µm.

7. Process according to any of the preceding claims, **characterized in that** the process is performed at a temperature of 280°C to 400°C, preferably 320°C to 380°C, particularly preferably 340°C to 360°C.

8. Process according to any of the preceding claims, **characterized in that** the process is performed at an absolute pressure in the fluidized bed reactor of 0 to 0.5 MPa, preferably 0.02 to 0.4 MPa, particularly preferably 0.05 to 0.25 MPa.

9. Process according to any of the preceding claims, **characterized in that** hydrogen chloride and ultrahigh purity silicon are present in a molar ratio of 10:1 to 3:1, preferably 7:1 to 3:1, particularly preferably 5:1 to 3:1, in particular 3.9:1 to 3.1:1.

10. Process according to any of the preceding claims, **characterized in that** the reaction gas contains at least 50% by volume, preferably at least 70% by volume, particularly preferably at least 90% by volume, of hydrogen chloride.

11. Process according to any of the preceding claims, **characterized in that** the quotient of fill height to reactor diameter is 10:1 to 1:1, preferably 8:1 to 2:1, particularly preferably 6:1 to 3:1.

12. Process according to any of the preceding claims, **characterized in that** the chlorosilanes are selected from the group comprising monochlorosilane, dichlorosilane, trichlorosilane, Si₂Cl₆, HSi₂Cl₅ and mixtures thereof.

13. Process according to any of the preceding claims, **characterized in that** it is incorporated in an integrated system for producing polycrystalline silicon.

## Revendications

1. Procédé de fabrication de chlorosilanes dans un réacteur à lit fluidisé par mise en réaction d'un gaz réactionnel contenant du chlorure d'hydrogène avec une masse de contact particulaire, contenant du silicium pur ayant une pureté > 99,9 % et un catalyseur, le catalyseur comprenant au moins un élément du groupe muni de Co, Mo et W, et les chlorosilanes présentant la formule générale HₙSiCl₄₋ₙ et/ou HₘCl₆₋ₘSi₂ avec n = 1 à 4 et m = 0 à 4, **caractérisé en ce que** le catalyseur est contenu en une proportion de 100 à 400 ppm en poids dans la masse de contact, par rapport au poids de la masse de contact.

2. Procédé selon la revendication 1, **caractérisé en ce que** le catalyseur comprend au moins un élément du groupe muni de Zn, Cr et Ni.

3. Procédé selon l'une quelconque des revendications précédentes, **caractérisé en ce que** le catalyseur est contenu dans la masse de contact sous forme métallique, oxydique, carburique, alliée et/ou saline.

4. Procédé selon l'une quelconque des revendications précédentes, **caractérisé en ce que** la masse de contact est un produit secondaire lors du dépôt de silicium polycristallin et/ou lors de l'usinage mécanique de silicium poly-/multi- ou monocristallin.

5. Procédé selon l'une quelconque des revendications précédentes, **caractérisé en ce que** le catalyseur est un constituant d'une abrasion d'outils de broyage, de parties d'installations et/ou de canalisations.

6. Procédé selon l'une quelconque des revendications précédentes, **caractérisé en ce que** le silicium pur présente un diamètre de Sauter d₃₂ de 0,5 à 150 µm, de préférence de 1 à 100 µm, de manière particulièrement préférée de 5 à 80 µm, notamment de 10 à 80 µm.

7. Procédé selon l'une quelconque des revendications précédentes, **caractérisé en ce que** le procédé est réalisé à une température de 280 à 400 °C, de préférence de 320 à 380 °C, de manière particulièrement préférée de 340 à 360 °C.

8. Procédé selon l'une quelconque des revendications précédentes, **caractérisé en ce que** le procédé est réalisé à une pression absolue dans le réacteur à lit fluidisé de 0 à 0,5 MPa, de préférence de 0,02 à 0,4 MPa, de manière particulièrement préférée de 0,05 à 0,25 MPa.

9. Procédé selon l'une quelconque des revendications précédentes, **caractérisé en ce que** le chlorure d'hydrogène et le silicium pur sont présents en un rapport molaire de 10:1 à 3:1, de préférence de 7:1 à 3:1, de manière particulièrement préférée de 5:1 à 3:1, notamment de 3,9:1 à 3,1:1.

10. Procédé selon l'une quelconque des revendications précédentes, **caractérisé en ce que** le gaz réactionnel contient au moins 50 % en volume, de préférence au moins 70 % en volume, de manière particulièrement préférée au moins 90 % en volume, de chlorure d'hydrogène.

11. Procédé selon l'une quelconque des revendications précédentes, **caractérisé en ce que** le quotient de la hauteur de remplissage sur le diamètre de réacteur est de 10:1 à 1:1, de préférence de 8:1 à 2:1, de manière particulièrement préférée de 6:1 à 3:1.

12. Procédé selon l'une quelconque des revendications précédentes, **caractérisé en ce que** les chlorosilanes sont choisis dans le groupe muni du monochlorosilane, du dichlorosilane, du trichlorosilane, de Si₂Cl₆, de HSi₂Cl₅ et de mélanges de ceux-ci.

13. Procédé selon l'une quelconque des revendications précédentes, **caractérisé en ce qu'**il est intégré dans un réseau pour la fabrication de silicium polycristallin.
